Europäisches Patentamt

European Patent Office

Office européen des brevets

(19)

(11) Veröffentlichungsnummer: **0 158 142**
**B1**

(12) EUROPÄISCHE PATENTSCHRIFT

(45) Veröffentlichungstag der Patentschrift: **04.04.90**

(21) Anmeldenummer: **85102852.2**

(22) Anmeldetag: **12.03.85**

(51) Int. Cl.⁵: **G 05 D 21/02, G 01 N 9/18**

(54) Vorrichtung zur Bestimmung und/oder Konstanthaltung des Mischungsverhältnisses einer Flüssigkeitsmischung.

(30) Priorität: **27.03.84 DE 3411163**

(43) Veröffentlichungstag der Anmeldung:
**16.10.85 Patentblatt 85/42**

(45) Bekanntmachung des Hinweises auf die Patenterteilung:
**04.04.90 Patentblatt 90/14**

(84) Benannte Vertragsstaaten:
**AT BE CH DE FR GB IT LI LU NL SE**

(56) Entgegenhaltungen:
**FR-A-1 447 071**
**US-A-3 947 356**
**US-A-4 131 019**

(73) Patentinhaber: **Baldwin-Gegenheimer GmbH**
**Derchinger Strasse 137**
**D-8900 Augsburg (DE)**

(72) Erfinder: **Engelhardt, Ernst**
**Käuzchenweg 14**
**D-8900 Augsburg (DE)**
Erfinder: **Kölbl, Georg**
**Parkstrasse 1**
**D-8902 Neusäss (DE)**

(74) Vertreter: **Munk, Ludwig, Dipl.-Ing.**
**Patentanwalt Prinzregentenstrasse 1**
**D-8900 Augsburg (DE)**

Courier Press, Leamington Spa, England.

## Beschreibung

Die Erfindung betrifft eine Vorrichtung zur Bestimmung und Konstanthaltung des Mischungsverhältnisses einer Flüssigkeitsmischung der im Gattungsbegriff des Anspruchs 1 angegebenen Art.

Aus der GB—A 20 84 079 ist eine derartige Vorrichtung bekannt, die zur Bestimmung und Konstanthaltung des Mischungsverhältnisses von Druckfarbe und Lösungsmittel dient. Bei dieser bekannten Anordnung ist das Ventil mittels einer Stange direkt durch den Schwimmkörper betätigbar. Infolge der hier vom Schwimmkörper zu überwindenden Ventilaufhebekräfte ergibt sich hierbei ein vergleichsweise großer Raumbedarf, da das Volumen des Schwimmkörpers so groß sein muß, daß die hierauf wirkenden Auftriebskräfte ausreichen, um das Ventil zu betätigen. Zudem läßt sich bei der bekannten Anordnung eine Konstanthaltung des Mischungsverhältnisses nur innerhalb einer vergleichsweise großen Bandbreite erreichen. Dies liegt einerseits an dem in den Regelungsprozeß eingehenden Gewicht des mit dem Schwimmkörper verbundenen Ventilteils und andererseits an der als Störgröße wirkenden Zähigkeit der durch das Ventil hindurchströmenden Beimischkomponente. Hinzu kommt, daß das Ventil infolge seiner geringen Durchtrittsquerschnitte störanfällig ist und zeitverzögerungsbehaftet reagiert. Ein weiterer Nachteil der bekannten Anordnung ist darin zu sehen, daß hier keine Speicherung und Aufzeichnung der momentanen Mischungsverhältnisse vorgesehen und möglich ist.

Die FR—A 14 47 071 zeigt eine Vorrichtung zur Messung der Oechsle-Grade von Most. Hierbei wird demnach nur ein Mischungsverhältnis bestimmt. Eine Konstanthaltung ist nicht beabsichtigt und bei der bekannten Vorrichtung auch gar nicht möglich. Diese enthält einen in einem Gefäß aufgenommenen Schwimmkörper, der eine Blende trägt, die mit übereinander angeordneten Erkennungsfeldern versehen und mittels einer in der Höhe stationär angeordneten Abtasteinrichtung berührungsfrei abtastbar ist. Die Blende ist dabei mit einer Skala versehen, die eine Codierung mit Erkennungsfeldern konstanter Höhe aufweist. Dies führt jedoch im Falle einer unlinearen Beziehung zwischen der Eintauchtiefe des Schwimmkörpers und der zu messenden Eigenschaft der Flüssigkeit zu unerwünschten Ungenauigkeiten. Hinzu kommt, daß bei der bekannten Vorrichtung das den Schwimmkörper aufnehmende Gefäß nicht in einen Flüssigkeitskreislauf einbezogen ist, sondern lediglich für den Meßvorgang befüllbar ist.

Die US—A 3 947 356 zeigt eine Vorrichtung zur Konstanthaltung des Mischungsverhältnisses des bei Offsetdruckmaschinen verwendeten Feucht mittels mittels einer elektrischen Steuerung. Der Ausgang der Meßeinrichtung zur Bestimmung des Mischungsverhältnisses liegt hierbei am Istwerteingang einer Schalteinrichtung, mittels derer ein eine Beimischleitung kontrollierendes Ventil betätigbar ist. Die Meßeinrichtung enthält dabei eine direkt im Feuchtmittelreservoir angeordnete Membranpumpe. Auch diese bekannte Anordnung ist daher sehr störanfällig und nicht genau genug. Die Membranpumpe arbeitet nämlich mit vergleichsweise kleinen Querschnitten im Ein- und Auslauf, die zu Verschmutzungen neigen. Dadurch kann eine Veränderung der Eichkurve der Membranpumpe auftreten, was zu unerwünschten Korrekturen zwingt.

Hiervon ausgehend ist es daher die Aufgabe der vorliegenden Erfindung, unter Vermeidung der Nachteile der bekannten Anordnungen eine Vorrichtung gattungsgemäßer Art zu schaffen, die einerseits nicht nur eine hohe Genauigkeit gewährleistet, sondern auch eine einfache Möglich-keit zur Anzeige und/oder Speicherung der festgestellten Werte bietet, und andererseits nicht nur mit vergleichsweise geringem Bauraum auskommt, sondern auch eine hohe Zuverlässigkeit gewährleistet.

Diese Aufgabe wird mit den kennzeichnenden Maßnahmen des Anspruchs 1 gelöst.

Mit den erfindungsgemäßen Maßnahmen werden die eingangs geschilderten Nachteile vollständig vermieden. Die erfindungsgemäßen Maßnahmen ergeben in vorteilhafter Weise einen Regelkreis mit berührungsloser Meßwertaufnahme, was eine hohe Genauigkeit gewährleistet. Eine Konstanthaltung beispielsweise der Alkoholkonzentration des im Offsetdruckverfahren Verwendung findenden Feuchtmittels innerhalb einer Bandbreite von lediglich 0,5% ist hierbei ohne weiteres zu erreichen. Gleichzeitig ist aber auch eine Änderung der gewünschten Konzentration durch einfache Sollwertverstellung leicht zu bewerkstelligen. Ein weiterer Vorteil der erfindungsgemäßen Maßnahmen ist darin zu sehen, daß die Blende mit ihren Erkennungsfeldern auch bei nicht linearer Abhängigkeit der Eintauchtiefe des Schwimmkörpers von der in Betracht zu ziehenden Meßgröße praktisch ein Messungs- und Regelungsverhalten wie bei einer linearen Abhängigkeit ergibt. Diese Linearisierung führt in vorteilhafter Weise zu einem Regelkreis mit digitaler Meßwertaufnahme, was eine hohe Genauigkeit sowie eine einfache Anzeige und Speicherung der aufgenommenen Werte ermöglicht. Die Speicherung ermöglicht dabei in vorteilhafter Weise zudem eine Mittelwertbildung über sämtliche, innerhalb eines bestimmten Zeitraums aufgenommenen Werte, wodurch Spitzen ausgeglichen werden können, was sich ebenfalls positiv auf die erzielbare Genauigkeit auswirkt.

Vorteilhafte Weiterbildungen und zweckmäßige Ausgestaltungen der übergeordneten Maßnahmen sind in den Ansprüchen 2 bis 7 angegeben.

Nachstehend wird ein Ausführungsbeispiel der Erfindung anhand der Zeichnung näher erläutert.

In der Zeichnung zeigen:

Figur 1 eine einer Offsetdruckmaschine zugeordnete Vorrichtung erfindungsgemäßer Art zur Konstanthaltung der Alkoholkonzentration im Feuchtmittel,

Figur 2 eine Ansicht der berührungslos abgetasteten Blende und

Figur 3 eine Draufsicht auf einen die Blende aufnehmenden, mit Sendern und Empfängern versehenen Träger,

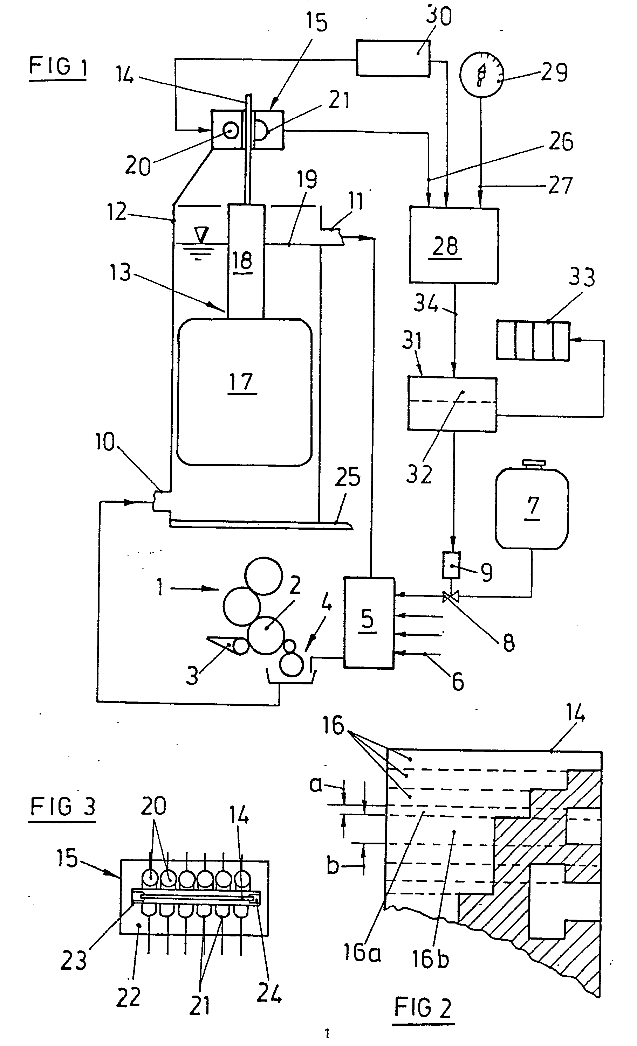

Im Offsetdruckverfahren werden die nichtdruckenden Stellen der Druckplatte bekanntlich mit einem Feuchtmittel befeuchtet, das neben Wasser im wesentlichen Alkohol und u.U. eine geringe Menge an Säure und/oder Lauge enthält. Es ist erwünscht, das Mischungsverhältnis dieser Komponenten möglichst konstant zu halben. In Figur 1 ist eine Offsetdruckmaschine 1 angedeutet, deren Plattenzylinder 2 mittels eines Farbwerks 3 mit Farbe und mittels eines Feuchtwerks 4 mit einem Feuchtmittel versorgt wird. Das Feuchtwerk 4 ist mit einer mit Feuchtmittel beaufschlagbaren Wanne 5 versehen. Zur Konstanthaltung der Betriebsbedingungen wird das Feuchtmittel über eine Aufbereitungsanlage 6 umgewälzt, in welcher auch der Verbrauch an Feuchtmittel ergänzt wird. Hierzu ist die Aufbereitungsanlage 5 mit den einzelnen Komponenten zugeordneten Eingängen 6 versehen. Der dem Alkohol zugeordnete Eingang 6 ist an einen Tank 7 angeschlossen, und mittels eines Ventils 8 auf- und absteuerbar, dem hier ein als Hubmagnet ausgebildeter Stellm-otor 9 zugeordnet ist.

Die Vorrichtung zur Konstanthaltung des Alkoholgehalts besteht aus einer in dem über die Aufbereitungsanlage 5 führenden Umwälzkreislauf angeordneten, hier bezüglich der Aufbereitungsanlage 5 stromaufwärts vorgesehenen, mit einerm bodenseitigen Einlauf 10 und einem auf höherem Niveau angeordneten Überlauf 11 versehenen Gefäß 12, in welchem ein Schwimmkörper 13 aufgenommen ist. Am Schwimmkörper 13 ist eine Blende 14 befestigt, die von einer stationär angeordneten Abtasteinrichtung 15 abgetastet wird. Die Blende 14, ist, wie am besten aus Figur 2 zu ersehen ist, mit übereinander angeordneten Erkennungsfeldern 16 versehen, die jeweils einem bestimmten Konzentrationsbereich zugeordnet sind. Die Abtasteinrichtung 15 ist dabei so angeordnet und ausgebildet, daß jeweils ein Erkennungsfeld 16 erfaßbar ist. Welches Feld erfaßt wird, hängt davon ab, wie tief der Schwimmkörper 13 in die im Gefäß 12 enthaltene Flüssigkeit eintaucht. Diese Eintauchtiefe hängt ihrerseits vom spezifischen Gewicht der Flüssigkeit ab, da die am Schwimmkörper angreifende Auftriebskraft, d.h. das Gewicht der verdrängten Flüssigkeit, mit dem Gesamtgewicht von Schwimmkörper 13 und Blende 14 im Gleichgewicht sein muß. Dies ist ein Maß für die Alkoholkonzentration, da sich das spezifische Gewicht des Feuchtmittels nach einer bekannten Funktions mit der Alkoholkonzentration ändert. Jedes Erkennungsfeld 16 enthält daher eine von der Abtasteinrichtung 15 lesbare Information über die der zugehörigen Eintauchtiefe des Schwimmkörpers 13 entsprechende Alkoholkonzentration. Die am Ausgang der Abtasteinrichtung 15 anfallenden Werte geben demnach den tatsächlichen Alkoholgehalt an und lassen sich als Ist-Werte zur Steuerung der Alkoholkonzentration direkt verwenden.

Der Schwimmkörper 13 ist, wie Figur 1 weiter erkennen läßt, zur Erzielung einer hohen Auftriebskraft mit einem aus der Flüssigkeit im Gefäß 12 niemals austauchenden Tauchkörper 17 und einer von diesem nach oben abstehenden Stange 18 versehen, welche den Flüssigkeitsspiegel 19 durchstößt. Die Blende 14 ist an/der Stange 18 befestigt. Der Durchmesser der Stange 18 ist gegenüber dem Durchmesser des Tauchkörpers 17 vergleichsweise klein und über der gesamten Höhe der Stange 18 konstant. Hierdurch ergeben sich einfache, einschließlich von der Eintauchtiefe abhängende, geometrische Verhältnisse zur Bestimmung des Alkoholgehalts. Die Länge der Stange 18 entspricht zumindest der Gesamthöhe der Blende 14, d.h. der Gesamthöhe sämtlicher übereinander angeordneter Erkennungsfelder 15. Der gewünschte Tiefgang des Tauchkörpers 17 kann einfach durch Beschwerung etc. justiert werden.

Die Höhe der übereinander angeordneten Erkennungsfelder 16 entspricht einem, der gewünschten Konstanthaltungsgenauigkeit entsprechenden Bereich der Alkoholkonzentration. In der Praxis ist eine Konstanthaltung der Alkoholkonzentration innerhalb eines Bereichs von 0,5% erwünscht. Die Höhe der Erkennungsfelder 16 entspricht daher der Änderung der Eintauchtiefe des Schwimmkörpers 13 bei einer Änderung der Alkoholkonzentration um jeweils 0,5%. Sofern die die Abhängigkeit der Eintauchtiefe von der Alkoholkonzentration angebende Kurve linear verliefe, hätten alle Erkennungsfelder 16 die gleiche Hohe. Die genannte Kurve verläuft jedoch nicht linear. Diese Unlinearität läßt sich durch entsprechende Variation der Höhe einzelner Erkennungsfelder ausgleichen, wie in Figur 2 beispielsweise anhand der Erkennungsfelder 16a bzw. 16b angedeutet ist. Das Erkennungsfeld 16a besitzt eine vergleichsweise kleine Höhe a. Dies bedeutet, daß sich die Eintauchtiefe des Schwimmkörpers 13 über dem zugeordneten Alkoholkonzentrationsbereich vergleichsweise wenig ändert. Das Erkennungsfeld 16b weist eine vergleichsweise große Höhe auf. Dies bedeutet, daß sich die Eintauchtiefe des Schwimmkörpers 13 über dem zugeordneten Alkoholkonzentrationsbereich vergleichsweise stark ändert. Mit diesem Kunstgriff hinsichtlich der Variation der Höhe der einzelnen Erkennungsfelder läßt sich daher in vorteilhafter Weise eine Linearisierung der Alkoholkurve erreichen.

Die Blende 14 wird im Bereich der Abtasteinrichtung 15 berührungslos abgetastet. Im dargestellten Ausführungsbeispiel soll die Blende 14 als optische Blende ausgebildet sein, bei der die Intensität des durch sie hindurchtretenden Lichts als Maß für die Alkoholkonzentration erfaßt wird. Dementsprechend ist die Abtasteinrichtung 15 mit mindestens einem optischen Sender 20, etwa in Form einer Diode, und mit mindestens einem optischen Empfänger 21, etwa in Form einer Fotozelle, versehen. Die Erkennungsfelder 16 sind so ausgebildet, daß sie an man-chen Stellen Licht durchlassen und an man-chen Stellen nicht, woraus die gewünscht Information erhalten werden kann. Im dargestellten Ausführungsbeispiel sind die Erkennungsfelder 2, wie in Figur 2 angedeutet ist, gemäß dem sogenannten Gray-Code ausgestaltet, wobei eine Codebreite von 6 Bit vorgesehen ist. Dementsprechend ist jedes Erkennungsfeld 16 in 6 nebeneinander liegende Bereich unterteilt, die gemäß der Gesatzmäßigkeit des Gray-Codes lichtdurchlässig bzw. lichtundurchlässig sind. In Figur 2 sollen beispielsweise die schraffierten Bereich lichtundurchlässig, die übrigen Bereich lichtdurchlässig sein.

Entsprechend der Codebreite von 6 Bit ist die Abtasteinrichtung 15, wie Figur 3 zeigt, mit 6 nebeneinander angeordneten Sendern 20 und 6 nebeneinander angeordneten Empfängern 21 versehen, die jeweils einem Bereich der sechs Bereiche der Erkennungsfelder 16 zugeordnte sind. Diese nebeneinander angeordneten Sender 20 und Empfänger 21 in Form von Dioden bzw. Fotozellen sind auf einem Träger 22 aufgenommen, der mit einen den Abstand zwischen den Sendern und den Empfängern überbrückenden Schlitz 23 versehen ist, in den die abzutastende Blende 14 eingreift. Die Blende 14 kann beispielsweise aus einer entsprechend dem Gray-Code bedruckten Karte aus durchsichtigem Material bestehen, die in einem Rahmen 24 aufgenommen ist, der im Schlitz 23 geführt sein kann. Der Träger 22 ist bezüglich des Gefäßes stationär angeordnet. Hierzu kann der Träger 22, wie in Figur 1 angedeutet ist, einfach mit dem seinerseits an einem geeigneten stationären Rahmen 25 fixierten Gefäß 12 verbunden sein.

Die durch die berührungslose Abtastung der Blende 14 mittels der Abtasteinrichtung 15 aufgenommenen Wert werden als Ist-Werte mit/ einem Soll-Wert vergleichen, wobei aus einer eventuell vorhandenen Abweichung zwischen Ist-Wert und Soll-Wert ein Befehl zum Öffnen bzw. Schließen des dem Alkoholeingang 6 zugeordneten Ventils 8 gebildet wird. Hierzu ist, wie in Figure 1 weiter angedeutet ist, eine mit einem Ist-Wert-Eingang 26 und einem Soll-Wert-Eingang 27 versehene Schalteinrichtung 28 vorgesehen, deren Ist-Wert-Eingang 26 am Ausgang der Abtasteinrichtung 15 liegt und deren Soll-Wert-Eingang 27 mit einem Soll-Wert-Geber 29 verbunden ist. Der Soll-Wert-Geber 29 ist zweckmäßig einstellbar. Die die Empfänger 21 der Abtasteinrichtung 15 bildenden Fotozellen wirken als fotoelektrische Wandler, die eine dem einfallenden Licht entsprechende elektrische Größe abgeben. Der einstellbare Sollwertgeber 29 kann daher einfach als Potentiometer ausgebildet sein. Die Sender 20 können laufend in Betrieb sein. Die Empfänger 21 werden von der Schalteinrichtung 28 in zeitlichen Abständen gleichzeitig oder nacheinander abgefragt. Zur Aktivierung und Steuerung der Abtasteinrichtung 15 und der Schalteinrichtung 28 ist eine von Hand ein- und ausschaltbare Steuereinheit 30 vorgesehen. Es wäre denkbar, die Steuereinheit 30 in die Schalteinrichtung 28 zu integrieren. Mit Hilfe der am Schaltausgang 34 der Schalteinrichtung 28 anfallenden Werte wird der dem Ventil 8 zugeordnete Stellmotor 9, hier in Form eines Schaltschütz, so angesteuert, daß das Ventil 8 bei Alkoholmangel offengehalten und bei Alkoholüberschub in Schließstellung gehalten wird. Die Abfrage der Empfänger 21 erfolgt in kurzen zeitlichen Intervallen. Zweckmäßig wird daher zunächst ein Mittelwert über mehrere Abfrageintervalle gebildet. Hierzu ist der Schalteinrichtung 28 ein Integrator 31 mit einem Speicher 32 nachgeordnet. Die abgefragten Werte werden im Speicher 32 gespeichert und anschließend auf integriert. Aus den integrierten Werten ergibt sich ein Mittelwert, der als Stellsignal für den Stellmotor 9 Verwendung findet. Gleichzeitig werden diese Werte auf einer mittels des Integrators 31 ansteuerbaren Digitalanzeigeeinrichtung 33 angezeigt. Hierdurch ist eine laufende visuelle Kontrolle des Alkoholgehalts durch das Bedienungspersonal möglich. Die Codierung der Blende 16 und die Ausgestaltung der Abtasteinrichtung 15 mit jeweils einer pro Bit vorgesehenen Sender-Empfänger-Einheit ergibt automatisch eine Digitalisierung der aufgenommenen Werte, was eine digitale Anzeige erleichtert. Es wäre denkbar, den Integrator 31 und/oder die hiervon ansteuerbare Anzeigeeinrichtung 33 und/oder den hiervon ansteuerbaren Stellmotor 9 in die Schalteinrichtung 28 zu integrieren.

**Patentansprüche**

1. Vorrichtung zur Bestimmung und Konstant-haltung des Mischungsverhältnisses einer Flüs-sigkeitsmischung, insbesondere zur Bestimmung und Konstanthaltung der Alkoholkonzentration der beim Offsetdruckverfahren verwendeten Feuchtflüssigkeit, mit einem in einem Gefäß (12), das mit einem Zulauf (10) und einem Überlauf (11) versehen und in einem die Flüssigkeitsmi-schung als Strömung führenden Flüssigkeits-kreislauf angeordnet ist, aufgenommenen Schwimmkörper (13), und mit einem eine in den Flüssigkeitskreislauf mündende Beimischleitung kontrollierenden Ventil (8), das in Abhängigkeit von der Eintauchtiefe des Schwimmkörpers (13) aktivier-bar ist, dadurch gekennzeichnet, daß eine mittels des Schwimmkörpers (13) in Abhängigkeit von dessen Eintauchtiefe bewegbare Blende (14) vorgesehen ist, die von einer gegenüber dem den Schwimmkörper (13) aufnehmenden Gefäß (12) stationär angeordneten Abtasteinrichtung (15) berührungsfrei abtastbar ist und die mit übereinander angeordneten, einander benachbarten, gleich breiten Bereichen der Konzentration einer Flüssigkeit zugeordneten, sich quer zur Bewegungsrichtung der Blende (14) erstreckenden Erkennungsfeldern (16) in Form von Zeilen des Gray-Codes mit einer Code-Breite von 6 bit versehen ist, deren Höhe jeweils der Änderung der Eintauchtiefe des Schwimmkörpers (13) bei einer Änderung der Konzentration zwischen den Grenzen des jeweils zugeordneten Bereichs entspricht, daß in der Abtasteinrichtung (15) jedem bit der Code-Breite des Erkennungsfeldes (16) jewèils eine Sender-Empfänger-Einheit zugeordnet ist, und daß der Ausgang der Abtasteinrichtung am Istwert-Eingang (26) einer Schalteinrichtung (28) liegt, die neben dem Istwert-Eingang (26) einen Sollwert-Eingang (27) und mindestens einen Schaltausgang (34) aufweist, durch den ein Stellmotor (9) ansteuerbar ist, mittels dessen das Ventil (8) betätigbar ist.

2. Vorrichtung nach Anspruch 1, dadurch gekennzeichnet, daß der Schwimmkörper (13) einen Tauchkörper (17) aufweist, der mittels einer hieran befestigten Stange (18), die über ihrer Länge, welche zumindest der gemeinsamen Höhe sämtlicher übereinander angeordneter Erkennungsfelder (16) konstanten Durchmesser aufweist, mit der Blende (14) verbunden ist.

3. Vorrichtung nach Anspruch 1 oder 2, dadurch gekennzeichnet, daß die Abtasteinrichtung (15) mindestens einen gegenüber dem den Schwimmkörper (13) aufnehmenden Gefäß (12) relativ bewegungsfrei angeordneter, vorzugsweise als Diode ausgebildeten optischen Sender (20) und mindestens einen diesem mit Abstand gegenüberliegenden, vorzugsweise als Photozelle ausgebildeten optischen Empfänger (21) aufweist und daß die Blende (14) als optische Blende ausgebildet ist, die in den Zwischenraum zwischen Sender und Empfänger (21) eingreift.

4. Vorrichtung nach Anspruch 3, dadurch gekennzeichnet, daß der bzw. die Sender (20) und der bzw. die Empfänger (12) auf einem mit einem Schlitz (23) für die Blende (14) versehenen Träger (22) aufgenommen ist bzw. sind, der vorzugsweise mit dem den Schwimmkörper (13) aufnehmenden Gefäß (12) fest verbunden ist.

5. Vorrichtung nach einem der vorhergehenden Ansprüche, dadurch gekennzeichnet, daß der bzw. die Empfänger (21) mittels der Schalteinrichtung (28) abfragbar sind.

6. Vorrichtung nach einem der vorhergehenden Ansprüche, dadurch gekennzeichnet, daß der dem Stellmotor (9) zugeordnete Schaltausgang (34) der Schalteinrichtung (28) über einen Speicher (32) und einen Integrator (31) führt.

7. Vorrichtung nach einem vorhergehenden Ansprüche, gekennzeichnet durch eine von der Schalteinrichtung (28) direkt oder indirekt ansteuerbare digitale Anzeigeeinrichtung (33).

## Revendications

1. Dispositif en vue de déterminer et de stabiliser le rapport de mélanges d'un mélange de liquides, en particulier pour la détermination et la stabilisation de la concentration en alcool du liquide de mouillage utilise lors du processus d'impression offset, ce dispositif comprenant un flotteur (13) renfermé dans un récipient (12), qui est muni d'une arrivée (10) et d'un trop-plein (11), tandis qu'il est dispose dans une circulation de liquide guidant le melange de liquide sous forme d'un courant, ainsi qu'une soupape (8) contrôlant la conduite d'addition debouchant dans la circulation de liquide, cette soupape pouvant être activée en fonction de la profondeur d'immersion du flotteur (13), caractérisé en ce que l'on prévoit un écran (14) mobile a l'intervention du flotteur (13) en fonction de sa profondeur d'immersion, cet écran pouvant être balayé sand contact par un dispositif (15) destiné à cet effet et dispose de maniere stationnaire par rapport au recipient (12) renfermant le flotteur (13), tandis qu'il est mini de champs de reconnaissance (16), sous forme de lignes du "code-Gray", d'une largeur de code de 6 bits, ces champs de reconnaissance étant disposes perpendiculairement au sens de deplacement de l'écran (14), tandis qu'ils sont attribués à des zones de concentration d'un liquide, ces zones étant de largeur égale, voisines l'une de l'autre et superposées, les hauteurs des champs de reconnaissance correspondant chaque fois à la modification de la profondeur d'immersion du flotteur (13) lors d'une modification de la concentration, au sein des limites de la zone chaque fois attribuée, en ce que, dans le dispositif de balayage (15), à chaque bit de la largeur de code du champ de reconnaissance (16) est chaque fois attribuée une unite emetteur-recepteur, et en ce que la sortie du dispositif de balayage est située à l'entrée (26) de valeur réelle d'un mécanisme de couplage (28), celui-ci étant muni, outre de l'entrée (26) de valeur réelle, d'une entrée (27) de valeur de consigne et d'au moins une sortie de commutation (34), par laquelle un servomoteur (9) peut être déclenché, au moyen duquel la soupape (8) peut être actionnée.

2. Dispositif selon la revendication 1, caractérisé en ce que le flotteur (13) est muni d'un plongeur (17) qui est relie à l'écran (14), a l'intervention d'une tige (18) qui y est fixée, cette tige présentant, sur toute sa longueur, au moins le diamètre constant de la hauteur commune de l'ensemble des champs de reconnaissance superposes.

3. Dispositif selon la revendication 1 ou 2, caractérisé en ce que le dispositif de balayage (15) est muni d'au moins un émetteur optique (20) réalise, de préférence, sous forme de diode, et dispose de manière relativement stationnaire par rapport au récipient (12) renfermant le flotteur (13) et d'au moins un récepteur optique (21) réalise, de préférence, sous forme d'une cellule photo-électrique, et se trouvant à l'écart et en face de l'émetteur, et en ce que l'écran (14) est realise sous forme d'écran optique, qui vient s'intercaler dans l'espace libre entre l'émetteur et le récepteur (21).

4. Dispositif selon la revendication 3, caractérisé en ce que le ou les émetteur(s) (20), ainsi que le ou les recepteur(s) (21) est ou sont logé(s) sur un support (22) muni d'une fente (23) pour l'écran (14), ce support étant, de préférence, relié a demeure au récipient (12) renfermant le flotteur (13).

5. Dispositif selon l'une quelconque des revendications précédentes, caractérisé en ce que le ou les récepteur(s) (21) peuvent être interroges à l'intervention du mecanisme de couplage (28).

6. Dispositif selon l'une quelconque des revendications précédentes, caractérisé en ce que la sortie de commutation (34) attribuée au servomoteur (9), du mécanisme de couplage (28) passe par une mémoire (32) et un intégrateur (31).

7. Dispositif selon l'une quelconque des revendications précédentes, caractérisé en ce que l'on prévoit un mécanisme de représentation (33) numérique pouvant être déclenché directement ou indirectement à partir du mécanisme de couplage (28).

**Claims**

1. A device for determining and keeping constant the mixing ratio of a liquid mixture and more especially for determining and keeping constant the alcohol concentration of dampening fluid as used in offset lithography, comprising a float (13) provided in a vessel (12), which is provided with an inlet (10) and an overflow (11) and in a fluid circuit supplying the fluid mixture as a flow, and a valve (8) which controls the additive line opening into the fluid circuit and which may be operated in accordance with the depth of immersion of the float (13) in the fluid, characterized by a marker (14) able to be moved by the float (13) in accordance with its depth of immersion and which may be sensed without making contact by a sensing device (15) which is stationary in relation to the vessel (12) in which the float (13) is received, and said marker is provided with superposed mutually adjacent indicating zones (16), which extend normally to the direction of motion of the marker (14), correspond to equally wide ranges of the concentration of a fluid and are in the form of lines of a gray code with a code width of 6 bits, the height of the same corresponding to the change in the depth of immersion of the float (13) on a change in the concentration between the limits of the respectively associated range, and furthermore in the sensing direction (15) there is a respective transmitter-receiver unit associated with each bit of the code width in the indicator zone (16), and furthermore the output of the sensing device is connected with the actual value input (26) of a circuit (28), which in addition to the actual value input (26) has a set point input (27) and at least one circuit output (34) by which a servo motor (9) may be operated for actuation of the valve (8).

2. The device as claimed in claim 1, characterized in that the float (13) has a submerging member (17), which by means of a rod (18) secured thereto is connected with the marker (14), such rod having a constant diameter along its length, which corresponds at least to the common height of all superposed indicator zones (16).

3. The device as claimed in claim 1 or claim 2, characterized in that the sensing device (15) comprises at least one optical transmitter (20), preferably in the form of a diode, arranged so that it is relatively free to move with respect to the vessel (12) with the float (13) therein, and at least one optical receiver (21) spaced from the transmitter and preferably in the form of a photocell, and the marker (14) is in the form of an optical baffle, which fits into the space between the transmitter and the receiver (21).

4. The device as claimed in claim 3, characterized in that the transmitter (20) or transmitters and the receiver (12) or receivers are mounted on a carrier (22) having a slot (23) for the marker (14), which is preferably fixed joined to the vessel (12) receiving the float (13).

5. The device as claimed in any one preceding claim, characterized in that the receiver or receivers (21) are able to be read by means of a circuit (28).

6. The device as claimed in any one preceding claim, characterized in that the circuit output (34) for the servo motor (9) of the circuit (28) is connected therewith via a memory (32) and an integrator (31).

7. The device as claimed in any one preceding claim, characterized by a digital indicating device (33) able to be directly or indirectly operated by the circuit (28).

EP 0 158 142 B1

FIG 1

FIG 3

FIG 2